Europäisches Patentamt

(19) European Patent Office

Office européen des brevets

(11) Numéro de publication: **0 271 439 B1**

(12) **FASCICULE DE BREVET EUROPEEN**

(45) Date de publication de fascicule du brevet:
06.11.91

(21) Numéro de dépôt: 87810655.8

(22) Date de dépôt: 12.11.87

(51) Int. Cl.⁵: **B23H 7/10**

(54) **Dispositif d'injection de liquide pour l'usinage par électroérosion.**

(30) Priorité: 26.11.86 CH 4749/86

(43) Date de publication de la demande:
**15.06.88 Bulletin 88/24**

(45) Mention de la délivrance du brevet:
**06.11.91 Bulletin 91/45**

(84) Etats contractants désignés:
**DE FR GB IT SE**

(56) Documents cités:
**EP-A- 0 161 656**
**EP-A- 0 163 359**
**EP-A- 0 165 438**

**PATENT ABSTRACTS OF JAPAN, vol. 9, no.**
**152 (M-391)[1875], 27 juin 1987; & JP-A-60 29**
**227 (TOSHIBA K.K.) 14-02-1985**

(73) Titulaire: **CHARMILLES TECHNOLOGIES S.A.**
**8-10, rue du Pré-de-la-Fontaine Zone indus-**
**trielle de Satigny**
**CH-1217 Meyrin 1(CH)**

(72) Inventeur: **Babel, Bernard**
**8, chemin Vert-Pré**
**F-1213 Petit-Lancy(FR)**
Inventeur: **Josserand, Joseph**
**Route du Suet**
**F-74350 Cruseilles(FR)**
Inventeur: **Gambin, Remi**
**"Les Collines" 25, route de Livron**
**F-74100 Vetraz-Monthoux(FR)**

(74) Mandataire: **Hugelin, Christiane**
**c/o CHARMILLES TECHNOLOGIES SA Case**
**postale 373**
**CH-1217 Meyrin 1(CH)**

### Description

La présente invention a trait à un dispositif d'injection de fluide d'usinage pour machine de découpage par fil-électrode permettant de pallier les collisions de la buse d'injection avec la pièce à usiner ou d'autres organes.

En effet, les utilisateurs de machines usinant par électro-érosion (EDM), en particulier les machines EDM pour découper avec un filélectrode, exigent des vitesses d'usinage de plus en plus élevées, aussi bien en ébauche qu'en finition.

Or l'usinage à grande vitesse rend nécessaire de placer les buses d'injection du liquide diélectrique le plus près possible des pièces à usiner (souvent à quelques dixièmes de millimètre de celles-ci, parfois même en contact avec elles) afin d'injecter à la pression requise une quantité de liquide diélectrique suffisant à l'évacuation des particules de métal érodé ainsi que des résidus provenant du craking thermique du liquide d'usinage. L'injection doit être suffisamment puissante pour refroidir le fil lors de l'usinage à grande vitesse, ainsi que pour maintenir en phase liquide le diélectrique situé entre le fil et la pièce. En effet, la grande énergie dissipée en cet endroit lors d'un usinage intense tend à transformer ce liquide en gaz.

Pour obtenir une pression d'injection élevée on peut songer à diminuer la section de l'orifice de sortie de la buse d'injection.

Toutefois ceci limite l'angle d'inclinaison que le fil peut prendre par rapport à l'axe de la buse sans toucher celle-ci, ce qui provoque des problèmes lors de certains usinages qui nécessitent une forte inclinaison du fil. De plus, l'expérience a montré que les meilleures conditions d'usinage s'obtiennent avec une buse dont le diamètre de sortie est supérieur à une certaine valeur. D'où la nécessité de placer l'embouchure de la buse très près de la pièce à usiner pour minimiser les pertes de charge entre les deux, afin de pouvoir usiner à très grande vitesse. En pratique, le maintien d'une très faible distance - de l'ordre de quelques dixièmes de millimètres - entre la buse et la pièce à usiner entraîne le risque de détériorer la buse par collision, soit avec des parties protubérantes de la pièce à usiner, soit avec des brides ou d'autres éléments servant à immobiliser cette dernière, par exemple. Il faut donc que l'opérateur prévoie à l'avance toutes les collisions possibles et prenne les dispositions nécessaires pour les éviter, par exemple en modifiant le programme qui commande la trajectoire d'usinage ou en changeant la manière dont la pièce est fixée sur la machine. Il va sans dire que de tels préparatifs renchérissent et/ou ralentissent sensiblement les opérations d'usinage. D'autre part, si on néglige ces précautions, et que la buse heurte ensuite par exemple une bride de fixation, soit au cours d'une translation entre deux étapes d'usinage, soit au cours de la découpe elle-même, cette buse, ainsi que certains des organes fragiles de la tête d'usinage sur laquelle elle est montée seront en général endommagés ou même rendus inutilisables et devront être remplacés, d'où une immobilisation plus ou moins longue de la machine à électroérosion et le coût des pièces de remplacement.

Il est possible de prévoir des buses avec des dispositifs amortissant les chocs, telles que les rondelles de polyuréthane décrites dans US 4,675,492 ou bien des dispositifs permettant d'appliquer l'orifice de la buse d'injection avec une faible pression contre la pièce à usiner, ce qui rend cette buse capable de suivre de faibles irrégularités de cette pièce, comme décrit dans ce même US 4,675,492 ou dans la demande de brevet japonais publiée sous le No 60-29227. On connaît aussi de nombreux dispositifs permettant de rétracter la buse en cas de choc frontal ou encore des buses dites "flottantes", telles celles décrites dans EP-A-163 359 ; ce type de buse est maintenu dans son boîtier en position de travail par le liquide sous pression, cette force étant contrebalancée en partie par des ressorts disposés entre les rebords du boîtier et de la buse ; il peut facilement se rétracter verticalement.

Mais aucun de ces dispositifs connus ne permet de pallier une collision latérale avec un obstacle tel qu'un organe de fixation de la pièce à usiner par exemple. D'une façon générale, d'après l'enseignement de l'état de la technique, il était impératif d'éviter les collisions, soit grâce à toutes sortes de systèmes ou en programmant la trajectoire de découpe, soit grâce à des réglages compliqués de la distance entre la buse et la pièce à usiner.

C'est pourquoi l'objet de la présente invention est un dispositif positif d'injection de liquide pour le découpage par électroérosion au moyen d'un fil-électrode, comportant une buse d'injection de liquide d'usinage profilée pour s'emboiter de façon étanche dans un boîtier non-basculable et maintenue en position de travail par une force de rappel dont au moins une partie est exercée par la pression du liquide d'usinage à l'intérieur d'une chambre délimitée par ce boitier et par l'intérieur de la buse et montée de manière à se rétracter en cas de choc frontal, caractérisé par le fait que la buse est montée de manière à basculer hors de sa position de travail sous l'action de forces extérieures non parallèles à ladite force de rappel, sans modifier la position du boîtier et du fil-électrode, et à créer une fuite de liquide entre la buse et le boîtier, faisant ainsi chuter la pression du liquide d'usinage à l'intérieur de la chambre. Un tel agencement permet à la buse de céder non seulement par une rétraction verticale, lors d'une collision frontale, c'est-à-dire en direction axiale, mais aussi par un basculement autour d'un axe horizontal lors d'une collision latérale.

Avec une buse d'injection agencée selon la présente invention, les collisions latérales et frontales sont donc beaucoup moins redoutables qu'avec les buses connues, ceci aussi bien pour la buse elle-même que pour les organes, souvent fragiles et sensibles aux chocs, montés dans la tête d'usinage sur laquelle est fixée la buse.

Ceci permet de simplifier les réglages et la programmation des mouvements relatifs entre la tête d'usinage et la pièce à usiner. Comme pour les buses "flottantes" déjà connues, ceci rend inutiles ou superflus les réglages minutieux de la hauteur de la tête d'usinage en fonction de l'épaisseur de la pièce à usiner ainsi que les précautions à observer (et à programmer) pour amener les buses en position d'usinage en évitant un choc frontal avec la pièce à usiner. Mais ceci rend de plus inutile de programmer la trajectoire de découpe en tenant compte de tous les obstacles, tels que les organes maintenant la pièce à usiner, pouvant se trouver dans la zone d'usinage.

Selon l'un des modes de réalisation préférés de la présente invention, le dispositif d'injection est muni d'un système émettant un signal lorsque la buse quitte sa position de travail. Ce signal peut être transmis à la commande numérique de la machine EDM. Ceci permet d'agir sur de nombreux paramètres, en particulier ceux commandant l'arrêt ou le ralentissement de l'usinage, la position le long de l'axe Z de la tête d'usinage concernée, la puissance de l'injection du fluide d'usinage. On peut ainsi interrompre le mouvement relatif entre la buse et la pièce à usiner afin d'éviter toute détérioration de la buse ou des organes sensibles aux chocs montés dans la tête d'usinage.

Mais surtout, il n'est plus indispensable d'arrêter l'usinage en cas de collision. Il suffit de le ralentir, d'écarter la buse de la pièce, puis de rétablir le régime rapide une fois que la buse a enjambé l'obstacle, ces opérations pouvant être réalisées automatiquement, sans l'intervention d'un opérateur.

Un tel système peut aussi rendre possible la détermination (et éventuellement la régulation) de la distance séparant l'orifice de la buse de la pièce à usiner. On peut, par exemple, mesurer en continu la pression hydraulique régnant à l'intérieur de la buse ou le débit du fluide et prévoir un système qui émette un signal dès que cette pression ou ce débit varie, par suite, par exemple, d'une rétraction ou d'un basculement de la buse ou par suite d'une variation de la distance séparant la buse de la pièce à usiner. Ce signal peut être envoyé, par exemple, à la commande numérique de la machine EDM, et permettre de faire varier automatiquement les conditions d'usinage en fonction des variations mesurées pour la pression ou le débit, ainsi éventuellement que la hauteur de la tête d'usinage au-dessus ou en dessous de la pièce, ou que la pression et le débit avec lesquels est alimintée la buse.

Comme il est possible de maintenir la buse à une distance donnée de la pièce, on peut usiner à la plus grande vitesse possible une pièce dont les surfaces ne sont pas lisses, planes, ou sont obliques. Il est également possible d'usiner sur les bords de la pièce, d'arrêter automatiquement l'usinage lorsque la trjectoire s'achève sur le bord de cette dernière.

Un autre avantage est dû au fait qu'une baisse de pression ou de débit intervient également lorsque le cheminement de l'électrodeoutil se rapproche d'une trajectoire déjà usinée, ou du bord de la pièce, la buse venant chevaucher le bord ou un sillon déjà usiné. Dans ces deux cas, il est justement intéressant d'obtenir un ralentissement automatique de l'usinage, car il y a dans ces deux cas risque de rupture du fil-électrode. Ce ralentissement n'est donc pas nécessairement programmé. On peut ainsi négocier les courbes serrées de la trajectoire ou des usinages très près du bord de la pièce, en diminuant le risque de rupture du fil car le régime d'usinage s'adapte, sans programmation compliquée, aux variations de la puissance de l'injection du fluide d'usinage, (et à la géométrie de la trajectoire).

Le dispositif d'injection de fluide d'usinage selon la présente invention peut présenter une infinité de formes d'exécution. Seules certaines des variantes possibles seront illustrées schématiquement et à titre d'exemple par le dessin annexé.

- la figure 1 représente une coupe d'une forme d'exécution de l'invention avec la buse en position de travail,
- la figure 2 représente le dispositif de la figure 1 lorsqu'un effort latéral est exercé sur la buse,
- la figure 3 est une coupe selon III-III de la figure 1,
- la figure 4 illustre d'autres formes d'exécution de la buse, et
- la figure 5 montre schématiquement un circuit régulant les impulsions d'usinage en fonction de la pression hydraulique dans la buse d'injection.

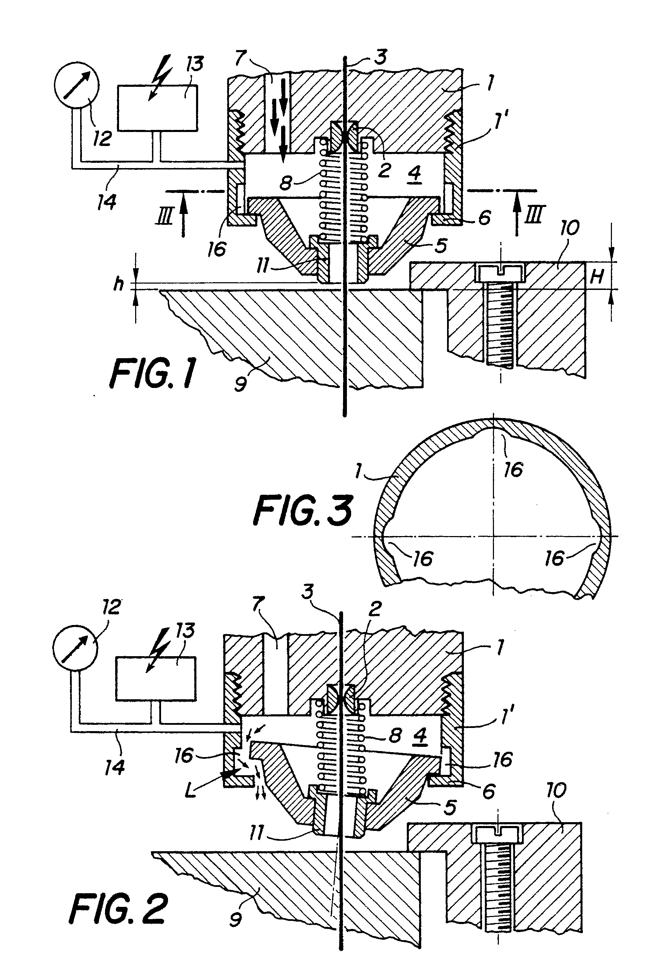

La figure 1 montre un dispositif selon l'invention en position de travail, c'est-à-dire avec son axe disposé verticalement. Le chiffre 1 désigne le boîtier du dispositif d'injection, dans lequel est monté le guide-fil supérieur 2 de la machine à usinage par électroérosion. Cet organe porteur 1 fait partie de la tête supérieure d'usinage de la machine, tête qui n'est pas reproduite en entier dans le dessin pour rendre celui-ci plus clair et parce qu'elle est bien connue dans le métier, ainsi d'ailleurs que le reste de la machine à électroérosion par fil. Cette machine comporte en outre une tête d'usinage inférieure qui, pour l'essentiel, est généralement symétrique à la tête supérieure et qui, pour cette raison n'est également pas représentée. Le boîtier 1 est muni d'une bague filetée 1'. Un fil-électrode 3 est tendu entre le guide-fil supérieur 2 et le guide-fil inférieur (non-représenté), pour découper par électroérosion une pièce 9 maintenue sur la table d'usinage de la machine par au moins une bride de fixation 10.

A la partie inférieure de l'organe porteur 1 la bague 1' délimite une chambre 4 pour le liquide d'usinage, cette bague étant munie d'un rebord intérieur 6 sur lequel repose la périphérie d'une buse d'injection conique 5 qui forme le fond de la chambre 4. Pour que cette buse ne puisse faire office d'électrode et être ainsi accidentellement elle-même usinée par le fil, elle sera de préférence réalisée en un matériau isolant, p.ex. en matière plastique. Le liquide d'usinage est amené sous une certaine pression à la chambre 4, à travers un canal 7 prévu dans le boîtier. La pression de ce liquide ainsi qu'un ressort de rappel 8 poussent la périphérie de la buse 5 contre le rebord 6, et permettent à la buse 5 de venir s'emboîter de façon étanche dans le boîtier 1 et évitent ainsi que le liquide ne s'échappe entre les deux. Accessoirement, le ressort 8 fait office de brise-jet en empêchant le courant de liquide issu du canal 7 d'exercer une trop grande force latérale sur le fil 3 et de le courber de façon indésirable. L'alésage du guide-fil 2 est en général très peu supérieur à la section du fil 3, ce qui empêche que le liquide d'usinage ne s'échappe en quantité notable par cette ouverture. Néanmoins, on peut prévoir un joint supplémentaire (non représenté) autour du fil, si on le désire. A sa partie inférieure la buse 5 comporte une embouchure pour diriger le liquide vers la pièce à usiner 9, ou plus exactement vers l'intérieur de l'espace créé par l'usinage entre le fil et la pièce. Cet espace, dans lequel ont lieu les décharges électriques, est généralement dénommé "gap". Bien que la sortie du liquide d'usinage de la chambre 4 puisse s'effectuer directement par cette embouchure, il peut être préférable de garnir l'embouchure d'un ajutage cylindrique 11 capable de coulisser dans cette embouchure, comme expliqué ci-dessous en référence à la figure 2.

La figure 2 montre le dispositif de la figure 1 dans une position où la buse conique 5 a heurté la bride 10 de fixation de la pièce à usiner, parce que la trajectoire de découpe passe trop près de cette bride dont la hauteur H au-dessus de la pièce 9 est supérieure à la hauteur libre h entre cette même pièce et l'ajutage 11. La force que la bride 10 exerce sur la buse présente une composante dirigée vers la gauche dans la figure 2 et une composante dirigée vers le haut dans cette figure. Le rapport entre ces composantes dépend de la conicité de la buse, de son coefficient de frottement etc. Ces paramètres seront donc choisis selon les circonstances de manière à ce que la force exercée par la bride 20 sur la buse fasse basculer cette dernière comme indiqué à la figure 2, ce qui l'amène à se soulever du rebord 6 à l'emplacement marqué L dans cette figure.

Dans cette position oblique, il y a fuite de liquide entre la buse 5 et le rebord 6 comme indiqué par des flèches, ce qui occasionne une baisse de pression dans la chambre 4. Cette baisse de pression est affichée sur un manomètre 12 qui communique avec la chambre 4 par une conduite 14. Un transducteur pression-courant 13 branché sur la même conduite est agencé pour émettre un signal électrique d'avertissement lors d'une telle baisse de pression. Ce signal peut être utilisé pour avertir l'opérateur. Il est de préférence utilisé pour agir de manière adéquate sur le déroulement des opérations d'usinage au moyen de la commande numérique de la machine en permettant, par exemple, de ralentir l'usinage pendant que la buse "enjambe" l'obstacle. L'homme du métier ou la commande de la machine choisira sans peine et selon les circonstances parmi un grand nombre possible d'actions à déclencher lorsqu'une chute de pression est signalée par le transducteur. Cette chute peut être due à une collision latérale ou frontale, ou encore à l'arrivée de la buse sur le bord de la pièce à usiner ou au chevauchement par cette dernière d'un sillon déjà usiné. Parmi ces actions on ne citera à titre d'exemple que les suivantes : ralentissement ou arrêt total de l'usinage avec accessoirement émission d'un signal d'alarme; ralentissement ou arrêt des moteurs (non représentés) qui assurent le déplacement latéral relatif du fil par rapport à la pièce ou l'avance longitudinale du fil, mouvement vertical de la tête supérieure d'usinage, augmentation de la pression ou du débit du fluide d'usinage, etc.

Pour amplifier la baisse de pression lorsque la buse se soulève de son siège , une ou plusieurs cavités 16 sont prévues à la base des parois latérales de la chambre 4, comme il ressort en particulier de la figure 3. Ces cavités forment des canaux de dérivation qui facilitent la fuite de liquide dès que la buse quitte le rebord 6 en un point quelconque de sa périphérie. Ils évitent donc à la fois une augmentation de la pression exercée par le liquide dans la chambre 4 (en particulier contre le guide-fil et d'autres organes sensibles de la tête d'usinage)
lorsque la buse commence à se soulever et accentuent ensuite la baisse de pression consécutive à la fuite de liquide entre la buse et son siège.

Il est à noter que, si en raison d'une erreur dans la programmation d'une découpe par fil, ou encore lorsque cette découpe est terminée, le fil-électrode 3 se trouve au bord de la pièce et que l'orifice de sortie du dispositif d'injection déborde de cette pièce, la pression dans la chambre 4 tombera également à une valeur suffisamment faible pour déclencher par l'intermédiaire du transducteur 13, soit un signal d'alarme, soit l'arrêt du processus d'usinage, soit toute autre mesure appropriée.

On décrira maintenant plus en détail la fonction de l'ajutage 11 monté avec un coulissement possible dans l'embouchure de la buse 5. L'expérience a montré que pour obtenir une injection efficace, surtout dans le cas d'un usinage à grande vitesse, il y avait avantage à ne laisser qu'un très petit espace h entre la sortie du dispositif d'injection et la surface de la pièce à usiner. Dans ces conditions, il est difficile d'éviter tout contact accidentel entre cette dernière et ledit dispositif, en particulier lorsque la buse est réalisée en une matière plastique pouvant assex facilement être déformée par la pression qui règne dans la chambre 4, ou pour toute autre raison, ce qui conduit à une usure par frottements et chocs. De plus , comme le liquide d'usinage est essentiellement incompressible, il transmet la pression et toute force verticale exercée sur la buse 5 est presqu'intégralement transmise au boîtier 1, la section de la buse étant la même que celle du boîtier, et par celui-ci à la tête d'usinage, ce qui risque de créer des distortions nuisibles à la précision de l'usinage. Pour ces raisons, l'embouchure de la buse 5 est garnie d'un ajutage amovible et cylindrique 11, réalisé de préférence, en matière isolante pour éviter les court-circuits intempestifs, et pouvant facilement coulisser en direction axiale dans cette embouchure. Il coulissera contre la force du ressort 8, sans que cela augmente notablement la pression à l'intérieur de la chambre 4. En effet, sa section étant faible par rapport à celle de la chambre 4, seule une fraction de la force exercée sur lui sera transmise à la tête d'usinage par le liquide de la chambre 4. De plus, l'ajutage 11 est bon marché et peut être remplacé facilement lorsqu'on désire varier la section de l'orifice de sortie du liquide ou lorsque l'ajutage s'est usé par frottement sur la pièce 9. Pour éviter toute détérioration de cette dernière à la suite d'un tel frottement, il est possible de réaliser l'ajutage 11 en une matière plastique de faible dureté, comme le téflon par exemple. Les figures 1 et 2 illustrent un ajutage 11 cylindrique. Mais il est évident que cette pièce peut présenter n'importe qu'elle autre forme, par exemple celle d'un cône s'évasant vers l'intérieur de la buse, cette forme lui permettant toutefois de coulisser vers l'intérieur de la buse.

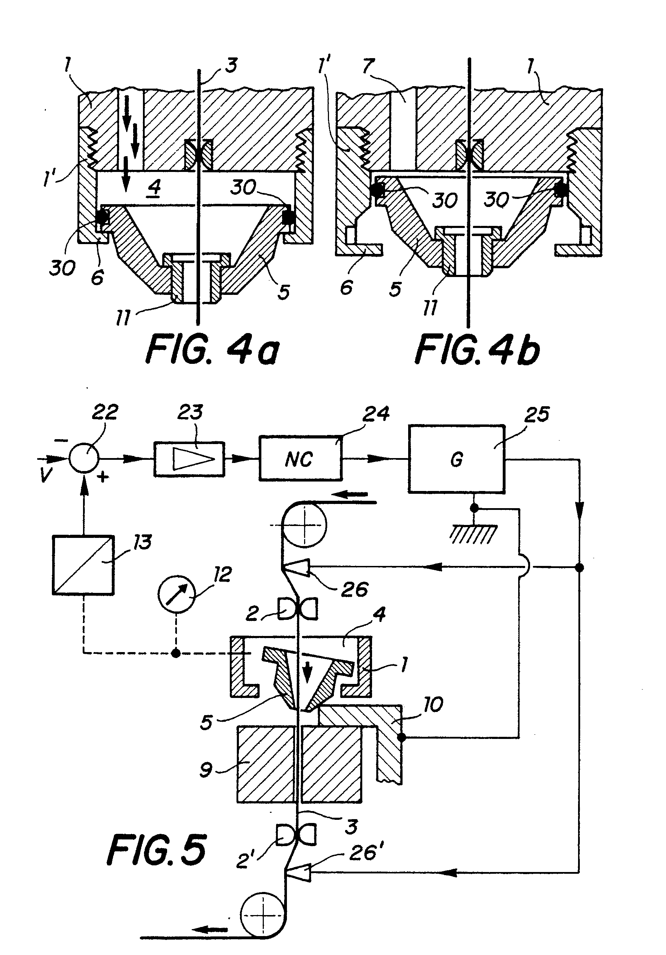

Le ressort 8 illustré aux figures 1 et 2 est facultatif, la pression hydraulique du liquide d'usinage régnant dans la chambre 4 suffisant à maintenir la buse 5 en position de travail. Le ressort peut d'ailleurs être remplacé par d'autres organes élastiques de type connu, tel un joint O-ring 30, installé dans une encoche circulaire réalisée sur le pourtour de la périphérie de la buse 5 (voir figures 4a et 4b). Ce système permet à la buse de rester coincée en position de repos, par suite d'un choc frontal par exemple. Un dispositif tel que celui illustré à la figure 4a sert à "durcir" le mouvement de la buse dans le boitier 1. Il permet en particulier d'effectuer les réglages en l'absence de pression dans la chamber 4 en "coinçant" la buse en position "haute" (ou de repos : sa périphérie est proche du sommet de la chambre 4) ou "basse" (position de travail : sa périphérie est en contact avec le rebord 6). Il peut être agencé de manière à être sans effet lorsque la pression est établie dans la chambre 4 (figure 4b).

Au lieu de mesurer la pression régnant dans la chambre 4, et d'élaborer à partir de ces mesures des signaux électriques, il est possible de mesurer le débit d'alimentation de la buse afin d'élaborer des signaux électriques.

Si l'on désire maintenir pendant l'usinage la hauteur h de l'interstice entre la sortie du dispositif d'injection et la pièce à usiner 9 à une valeur de consigne h , il est possible d'utiliser la valeur de la pression dans la chambre 4 pour déterminer à tout moment la hauteur h effective. Cette détermination, qui tiendra compte des caractéristiques de la pompe délivrant le liquide à la chambre 4, de la viscosité de ce liquide, des dimensions du gap etc... est affaire de routine pour un homme du métier. Celui-ci peut aussi réaliser un circuit - éventuellement commandé par un programme - pour calculer et transmettre à la commande numérique un signal dépendant de la pression (ou du débit) et servant à commander l'écartement entre la pièce et le dispositif d'injection de manière à maintenir l'interstice à la valeur prédéterminée h ou à le faire varier selon un programme préétabli. La méthode la plus simple pour déterminer la pression de consigne de l'interstice consiste évidemment à mesurer la pression qui s'établit dans la chambre 4 dans les conditions d'usinage prévalentes, après avoir ajusté l'interstice à la valeur h par des moyens optiques, mécaniques, hydrauliques ou autres.

Par ailleurs, on peut utiliser la mesure de la pression dans la chambre 4 pour régler la fréquence et l'amplitude des décharges électriques produites entre le fil et la pièce à usiner.

Lorsque la buse bute contre un obstacle, la pression dans la chambre 4 baisse, soit à cause du passage de liquide diélectrique par les canaux de dérivation, soit parce que l'embouchure de la buse n'est plus parallèle à la surface de la pièce à usiner. Le fluide diélectrique n'est alors plus injecté à la pression requise et en quantité suffisante dans le gap, ce qui peut conduire à la rupture du fil.

Cette situation et le risque de rupture ne se présentent pas uniquement lorsque la buse bute contre un obstacle mais dans de nombreux autres cas, dont les suivants : lorsque la machine effectue un usinage à proximité d'une ou plusieurs fentes déjà usinées dans la pièce, (lors d'une opération de "pucketing"), lors d'un usinage à proximité du bord de la pièce ou près d'une ouverture dans celle-ci, lorsque le plan inférieur ou supérieur de la pièce est irrégulier (matrices d'extrusion de l'aluminium) etc...

Tous ces cas entraînent un mauvais arrosage du fil. Le ralentissement (ou l'arrêt) de l'usinage qui, grâce au dispositif selon la présente invention, résultent automatiquement de la baisse de pression ou de débit constatée dans la chambre 4, sont évidemment des mesures favorables qui contribuent à diminuer les risques de rupture du fil-électrode.

La figure 5 illustre un mode de réalisation d'un circuit pour réguler le courant d'usinage, par exemple en agissant sur la fréquence des décharges, en fonction de la pression du liquide d'usinage dans la buse 5. Dans cette figure, la buse 5 vient de heurter une bride 10 servant à immobiliser la pièce à usiner 9. Le fil-électrode 3 passe dans un guide 2, puis à travers la zone d'usinage, et ensuite sur un second guide 2', pour être finalement entraîné hors de la zone d'usinage. La pression à l'intérieur de la chambre 4 est mesurée par un manomètre 12 et transformée en un signal électrique par un transducteur 13. Un comparateur 22 compare ce signal avec un signal V qui correspond à une valeur de consigne de la pression dans la chambre 4. Le comparateur transmet un signal représentant la différence entre ces deux signaux à une amplificateur 23, dont le signal de sortie est ensuite transmis à loa commande numérique 24 de la machine EDM. Cette dernière élabore en fonction du signal reçu un signal de commande qui agit sur le générateur 25 fournissant les impulsions d'usinage de façon à modifier leur fréquence de la manière voulue en fonction des variations de pression dans la chambre 4. Les impulsions d'usinage sont amenées au fil 3 de manière usuelle, par des contacts esquissés en 26 et 26'. Comme signalé précédemment, il peut être avantageux de mesurer les variations du débit au lieu de mesurer celles de la pression.

## Revendications

1. Dispositif d'injection de liquide pour le découpage par électroérosion au moyen d'un fil-électrode (3), comportant une buse (5) d'injection de liquide d'usinage profilée pour s'emboîter de façon étanche dans un boîtier (1) non-basculable et maintenue en position de travail par une force de rappel, dont au moins une partie est exercée par la pression du liquide d'usinage à l'intérieur d'une chambre (4) délimitée par ce boitier (1) et par l'intérieur de la buse (5) et montée de manière à se rétracter en cas de choc frontal, caractérisé par le fait que la buse (5) est montée de manière à basculer hors de sa position de travail sous l'action de forces extérieures non parallèles à ladite force de rappel, sans modifier la position du boîtier (1) et du fil-électrode (3), et à créer une fuite de liquide entre la buse (5) et le boîtier (1), faisant ainsi chuter la pression du liquide d'usinage à l'intérieur de la chambre (4).

2. Dispositif selon la revendication 1, dans lequel la buse (5) et le boîtier (1) sont profilés de manière que la buse (5) puisse basculer autour d'une infinité d'axes instantanés de rotation horizontaux, le boitier (1) restant fixe.

3. Dispositif selon la revendication 1, caractérisé en ce qu'au moins une partie de la force de rappel est exercée par un organe élastique reliant le boitier (1) à la buse (5).

4. Dispositif selon la revendication 3, caractérisé par un organe élastique constitué par un ressort (8) disposé coaxialement à la buse (5)

5. Dispositif selon la revendication 1, caractérisé en ce que l'extérieur de la buse (5) comporte une surface tronconique profilée de manière à ne pas rester bloquée contre un obstacle latéral (10).

6. Dispositif selon la revendication 1, caractérisé en ce qu'il comporte également des moyens de mise sous pression du liquide comprenant une pompe communiquant avec la chambre (4), et en ce que les bords (6) du boîtier (1) et de la buse (5) comportent des surfaces complémentaires destinées à être appliquées l'une contre l'autre par la pression du liquide, de manière à former un joint étanche empêchant ce liquide de s'écouler entre-eux.

7. Dispositif selon la revendication 6, caractérisé par un boitier (1) et/ou une buse (5) comportant à proximité desdites surfaces des canaux (16) de dérivation élargissant le passage libre entre les bords (6) du boitier (1) et de la buse (5) lorsque celle-ci bascule ou se rétracte hors de sa position de travail.

8. Dispositif selon la revendication 1, caractérisé en ce que la chambre (4) communique avec un transducteur (13) hydraulico-électrique agencé pour émettre des signaux électriques en fonction de la pression qui règne dans cette chambre (4) ou du débit du fluide d'usinage alimentant cette dernière.

9. Dispositif selon la revendication 8 caractérisé par le fait qu'il comporte aussi des moyens (22, 23) agencés pour communiquer les signaux électriques émis par le transducteur (13) à la commande numérique (24) de la machine EDM.

10. Dispositif selon la revendication 8, caractérisé par le fait qu'il comporte également un régulateur commandé par les signaux électriques émis par le transducteur (13) et agencé pour élaborer, en fonction des signaux émis par ce dernier, un signal de commande apte à agir sur le générateur (25) d'impulsions de la machine EDM.

11. Dispositif selon la revendication 8, caractérisé par des moyens agencés de manière à élaborer un signal apte à agir sur au moins un moteur servant à déplacer la pièce à usiner relativement au fil-électrode (3) ou à commander la position verticale de la buse (5)

12. Dispositif selon la revendication 8, caractérisé par des moyens agencés pour élaborer en fonction de certains signaux électriques émis par le transducteur (13) un signal provoquant l'arrêt de l'usinage.

13. Utilisation d'un dispositif selon la revendication 8, caractérisé par le fait que le signal de commande élaboré par le transducteur (13) provoque une baisse de fréquence des décharges d'usinage.

14. Dispositif selon la revendication 1, caractérisé par un ajutage (11) amovible monté dans l'embouchure de la buse (5) de façon à pouvoir y coulisser verticalement, et à être maintenu en position de travail par la force de rappel.

15. Dispositif selon la revendication 14, dans laquelle l' ajutage (11) est cylindrique.

## Claims

1. A device for the injection of liquid for cutting by electroerosion by means of a wire electrode (3), comprising a nozzle (5) for injecting machining liquid, shaped for tightly cooperating with a non-tilting case (1) and kept in its working position by a seating force, at least part of which is exerted by the pressure of the machining liquid inside a chamber (4) delimited by said case (1) and by the interior of said nozzle (5), and mounted in such a way as to retract in case of a frontal impact, characterized by the fact that said nozzle (5) is mounted in such a way as to tilt out of its working position under the action of external forces which are not parallel to the said seating force, said case (1) and said wire electrode (3) remaining fixed, and to create an escape of liquid between said case (1) and said nozzle (5) which causes a pressure drop of said machining liquid in said chamber (4).

2. The device as defined in Claim 1, in which said nozzle (5) and said case (1) are shaped so that said nozzle (5) is able to tilt around an infinity of instantaneous horizontal axes of rotation, said case (1) remaining fixed.

3. The device as defined in Claim 1, characterized in that at least part of the seating force in exerted by an elastic element joining said case (1) to said nozzle (5).

4. The device as claimed in Claim 3, characterized in that said elastic element is constituted by a spring (8) coaxially mounted in said nozzle (5).

5. The device as defined in Claim 1, characterized in that the outside of said nozzle (5) has a surface shaped as a truncated cone, in such a way as not to remain blocked against a lateral obstacle (10).

6. The device as defined in Claim 1, characterized in that it also has means for putting the liquid under pressure, including a pump connected with said chamber (4), and in that the edges (6) of said case (1) and said nozzle (5) have complementary surfaces intended to be put one against another by the pressure of said liquid in such a way as to form a tightly sealing joint preventing the liquid from flowing out between them.

7. The device as defined in Claim 6, characterized by said case (1) and/or said nozzle (5) having, adjacent to said surfaces, diversion channels (16) enlarging the free passage between said edges (6) of case (1) and of nozzle (5) when the latter tilts or retracts out of its working position.

8. The device as defined in Claim 1, characterized in that said chamber (4) connects with a hydraulic-electric transducer (13) arranged to transmit electrical signals as a function of the pressure prevailing in said chamber (4) or of the flow rate of the machining liquid feeding said chamber (4).

9. The device as defined in Claim 8, characterized by the fact that it also has means (22, 23) arranged for communicating the electrical signals transmitted by said transducer (13) to the digital control (24) of the EDM machine.

10. The device as defined in Claim 8, characterized by the fact that it also has a controller controlled by electrical signals transmitted by said transducer (13) and arranged to create, as a function of the signals transmitted by the latter, a control signal suitable for acting on the generator (25) of impulses of the EDM machine.

11. The device as defined in Claim 8, characterized by means arranged to create a signal suitable for acting on at least one motor serving to move the piece to be machined relative to said wire electrode (3) or to control the vertical position of said nozzle (5).

12. The device as defined in Claim 8, characterized by means arranged for creating, as a function of certain electrical signals transmitted by said transducer (13), a signal causing the stopping of the machining.

13. The device as defined in Claim 8, characterized by the fact that the control signal created by said transducer (13) causes a drop in the frequency of the machining discharges.

14. The device as defined in Claim 1, characterized by a removable nose-piece (11) mounted in the orifice of said nozzle (5) in such a way as to be able to slide vertically and to be kept in its working position by said seating force.

15. The device as defined in Claim 14, characterized by a cylindrical nose-piece (11).

## Patentansprüche

1. Flüssigkeitsinjektionsvorrichtung für das Schneiden durch Elektroerosion mittels einer Drahtelektrode (3), umfassend eine injektionsdüse (5) für Arbeitsflüssigkeit, die so profiliert ist, dass sie sich abdichtend in ein kippfestes Gehäuse (1) einfügt und in Arbeitsposition durch eine Vorspannkraft gehalten wird, von der zumindest ein Teil vom Druck der Arbeitsflüssigkeit im innern einer von diesem Gehäuse (1) und dem Innern der Düse (5) begrenzten Kammer (4) ausgeübt wird, und die derart montiert ist, das sie sich im Falle eines frontalen Stosses zurückzieht, dadurch gekennzeichnet, dass die Düse (5) aus Ihrer Arbeitsposition unter der Wirkung äusserer, zu der Vorspannkraft nichtparalleler Kräfte kippbar montiert ist ohne Veränderung der Position des Gehäuses (1) und der Drahtelektrode (3) und unter Herstellung eines Flüssigkeitslecks zwischen der Düse (5) und dem gehäuse (1), wodurch der Druck der Arbeitsflüssigkeit in der Kammer (4) abfällt.

2. Vorrichtung nach Anspruch 1, bei der die Düse (5) und das Gehäuse (1) derart profiliert sind, daß die Düse (5) um unendlich viele horizontale momentane Drehachsen kippen kann, wobei das Gehäuse (1) fest bleibt.

3. Vorrichtung nach Anspruch 1, dadurch gekennzeichnet, daß mindestens ein Teil der Vorspannkraft von einem elastischen Organ ausgeübt wird, das das Gehäuse (1) mit der Düse (5) verbindet.

4. Vorrichtung nach Anspruch 3, gekennzeichnet durch ein von einer koaxial zu der Düse (5) angeordneten Feder (8) gebildetes elastisches Organ.

5. Vorrichtung nach Anspruch 1, dadurch gekennzeichnet, daß das Äußere der Düse (5) eine kegelstumpfförmige Oberfläche umfaßt, die so profiliert ist, daß sie nicht gegen ein seitliches Hindernis (10) blockiert bleibt.

6. Vorrichtung nach Anspruch 1, dadurch gekennzeichnet, daß sie ferner Mittel zum Unterdrucksetzen der Flüssigkeit umfaßt einschließlich einer mit der Kammer (4) kommunizierenden Pumpe und daß die Ränder (6) des Gehäuses (1) und der Düse (5) komplementäre Oberflächen aufweisen, die von dem Flüssigkeitsdruck derart gegeneinanderpreßbar sind, daß sie eine den Austritt von Flüssigkeit zwischen ihnen verhindernde Dichtung ausbilden.

7. Vorrichtung nach Anspruch 6, gekennzeichnet durch ein Gehäuse (1) und/oder eine Düse (5) mit überleitungskanälen (16) nahe den genannten Oberflächen, die den freien Durchtritt zwischen den Rändern (6) des Gehäuses (1) un der Düse (5) erweitern, wenn diese aus ihrer Arbeitsposition kippt oder sich zurückzieht.

8. Vorrichtung nach Anspruch 1, dadurch gekennzeichnet, daß die Kammer (4) mit einem hydraulisch-elektrischen Wandler (13) kommuniziert, der ausgebildet ist zum Abgeben elektrischer Signale in Abhängigkeit von dem in dieser Kammer (4) herrschenden Druck oder dem diese speisenden Arbeitsfluiddurchsatz.

9. Vorrichtung nach Anspruch 8, dadurch gekennzeichnet, daß sie außerdem Mittel (22, 23) umfaßt, ausgebildet zum Übertragen der von dem Wandler (13) abgegebenen elektrischen Signale zur numerischen Steuerung (24) der Elektroerosionsmaschine.

10. Vorrichtung nach Anspruch 8, dadurch gekennzeichnet, daß sie außerdem einen Regler umfaßt, gesteuert von den vom Wendler (13) abgegebenen elektrischen Signalen und ausgebildet zum Erzeugen, in Abhängigkeit von den vom letzteren abgegebenen Signalen, eines Steuersignals, geeignet zum Einwirken auf den Impulsgenerator (25) der Elektroerosionsmaschine.

11. Vorrichtung nach Anspruch 8, gekennzeichnet durch derart ausgebildete Mittel, daß sie ein Signal erzeugen, geeignet zum Einwirken auf mindestens einen Motor, der zum Verlagern des Werkstücks relativ zu der Drahtelektrode (3) dient oder zum Steuern der Vertikalposition der Düse (5).

12. Vorrichtung nach Anspruch 8, gekennzeichnet durch Mittel, ausgebildet zum Erzeugen eines das Abbrechen der Bearbeitung bewirkenden Signals in Abhängigkeit von bestimmten vom Wandler (13) abgegebenen elektrischen Signalen.

13. Verwendung einer Vorrichtung nach Anspruch 8, dadurch gekennzeichnet, daß das vom Wandler (13) erzeugte Steuersignal eine Herabsetzung der Frequenz der Bearbeitungsentladungen bewirkt.

14. Vorrichtung nach Anspruch 1, gekennzeichnet durch einen beweglich in der Mündung der Düse (5) derart montierten Düseneinsatz (11), daß dieser in ihr vertikal gleitbeweglich ist und von der Vorspannkraft in Arbeitsposition gehalten wird.

15. Vorrichtung nach Anspruch 14, bei der der Düseneinsatz (11) zylindrisch ist.

FIG.1

FIG.3

FIG.2

FIG. 4a  FIG.4b

FIG.5

11